# EUROPÄISCHE PATENTANMELDUNG

(11) **EP 4 664 225 A1**
(43) Veröffentlichungstag der Anmeldung: **17.12.2025**
(21) Anmeldenummer: 24181224.7
(22) Anmeldetag: 10.06.2024
(51) Int. Cl.: G05D 1/224, G05D 1/644, G05D 105/10, G05D 107/40, G05D 109/10

(54) **ARBEITSGERÄT**

(71) Anmelder: Vorwerk & Co. Interholding GmbH, 42275 Wuppertal (DE)
(72) Erfinder: Starflinger, Frank, 44793 Bochum (DE)
(74) Vertreter: Dr. Solf & Zapf Patent- und Rechtsanwalts PartG mbB

(57) **Zusammenfassung**

Die vorliegende Erfindung betrifft ein Arbeitsgerät (1), aufweisend mindestens eine Steuereinheit (2) und mindestens einen Energiespeicher (3), wobei das Arbeitsgerät (1) dazu ausgebildet und eingerichtet ist, sich fahrend in einer Innenraumumgebung (5) autonom fortzubewegen.

Ein Arbeitsgerät (1), bei dem die Navigation in der Innenraumumgebung (5) verbessert wird, ist dadurch realisiert, dass die Steuereinheit (2) dazu ausgebildet und eingerichtet ist, zumindest während einer Bewegung in der Innenraumumgebung (5) Positionsdaten (201) des Arbeitsgeräts (1) und Routenparameterdaten (202) zu erfassen (200), zumindest unter Verwendung von Positionsdaten (201) und von Routenparameterdaten (202) mindestens eine bezüglich mindestens eines Routenparameters optimierte Route (9) zu ermitteln (203) und/oder Positionsdaten (201) und Routenparameterdaten (202) zur Bestimmung mindestens einer bezüglich mindestens eines Routenparameters optimierten Route (9) an einer Datenschnittstelle (10) bereitzustellen (204), und die optimierte Route (9) in mindestens einem Speicher (425) abzulegen (205).

## Beschreibung

Die Erfindung betrifft ein Arbeitsgerät, aufweisend mindestens eine Steuereinheit und mindestens einen Energiespeicher, wobei das Arbeitsgerät dazu ausgebildet und eingerichtet ist, sich fahrend in einer Innenraumumgebung autonom fortzubewegen.

Gattungsgemäße Arbeitsgeräte sind im Stand der Technik in einer Vielzahl von Ausgestaltungen bekannt. Derartige Arbeitsgeräte sind dazu ausgebildet, sich in einer Innenraumumgebung autonom fortzubewegen und insbesondere Arbeitsaufgaben zu erledigen. Ein Beispiel für solche Arbeitsgeräte sind Reinigungsgeräte, die in einer Innenraumumgebung Reinigungsaufgaben erledigen, Transportroboter in der Lagerlogistik oder Sicherheitsroboter, die zu Überwachungszwecken eingesetzt werden. Ein Reinigungsgerät ist beispielsweise als Saugroboter, Wischroboter oder Saug- und Wischroboter ausgebildet. Üblicherweise verfügen derartige Arbeitsgeräte über mindestens eine Steuereinheit, die eine Datenverarbeitungseinheit umfasst, und die mit einer Sensoreinheit eine Navigation des Arbeitsgerätes in der Innenraumumgebung gewährleistet sowie das Erledigen von Arbeitsaufgaben in der Innenraumumgebung steuert.

Aus dem Stand der Technik bekannte Arbeitsgeräte werden von der Steuereinheit mehr oder weniger zufällig, auch in Abhängigkeit von der Art und Anzahl von Hindernissen in der Innenraumumgebung gesteuert. Je nachdem, wie die Bewegung in der Innenraumumgebung erfolgt, variiert beispielsweise die Anzahl an Kollisionen mit Hindernissen. Dadurch kann sowohl die Dauer für die Erledigung einer Arbeitsaufgabe variieren als auch, beispielsweise bei Reinigungsgeräten, die Größe der gereinigten Fläche bei verschiedenen Arbeitseinsätzen unterschiedlich sein.

Der Erfindung liegt daher die Aufgabe zugrunde, ein Arbeitsgerät anzugeben, bei dem die Navigation in der Innenraumumgebung verbessert wird.

Die vorgenannte Aufgabe ist bei einem gattungsgemäßen Arbeitsgerät mit dem Merkmalsinhalt des Kennzeichnungsteils des Anspruchs 1 gelöst, nämlich dadurch, dass die Steuereinheit dazu ausgebildet und eingerichtet ist, zumindest während einer Bewegung in der Innenraumumgebung Positionsdaten des Arbeitsgeräts und Routenparameterdaten zu erfassen. Das Erfassen der Routenparameterdaten erfolgt vorzugsweise unter Verwendung mindestens eines Sensors oder einer Mehrzahl von Sensoren einer Sensoreinheit. Unter Verwendung zumindest von Positionsdaten und von Routenparameterdaten wird von der Steuereinheit mindestens eine bezüglich mindestens eines Routenparameters optimierte Route ermittelt und/oder Positionsdaten und Routenparameterdaten zur Bestimmung mindestens einer bezüglich mindestens eines Routenparameters optimierten Route, beispielsweise durch eine weitere Datenverarbeitungseinheit, an einer Datenschnittstelle bereitgestellt. Die optimierte Route bzw. die Daten zu der optimierten Route werden abschließend in mindestens einem Speicher, insbesondere der Steuereinheit, abgelegt.

Das Arbeitsgerät ist beispielsweise als Transportroboter in der Lagerlogistik, als Sicherheitsroboter, der zu Überwachungszwecken eingesetzt wird oder als Reinigungsgerät ausgebildet. Besonders bevorzugt ist das Arbeitsgerät als Reinigungsgerät zum Reinigen der Innenraumumgebung ausgebildet. Bei dem als Reinigungsgerät ausgebildeten Arbeitsgerät handelt es sich vorteilhaft um ein Reinigungsgerät mit Saug- und/oder Wischfunktion, insbesondere um einen Saugroboter, einen Wischroboter oder einen Saug- und Wischroboter. Das Arbeitsgerät verfügt insbesondere über mindestens eine Steuereinheit und eine Sensoreinheit, die das autonome Bewegen und Reinigen einer Innenraumumgebung durch das Reinigungsgerät steuert. Die Sensoreinheit weist vorzugsweise eine Mehrzahl an Sensoren auf. Die Steuereinheit weist insbesondere mindestens eine Datenverarbeitungseinheit mit mindestens einem Prozessor und mindestens einem Speicher auf.

Das Arbeitsgerät weist insbesondere ein Gehäuse auf. An dem Gehäuse des Arbeitsgeräts sind beispielsweise mindestens oder genau eine Antriebseinheit angeordnet, die z. B. zwei Antriebsräder mit jeweils mindestens einem Motor, insbesondere einem Elektromotor, aufweist. Die beiden Motoren der Antriebseinheit sind bevorzugt unabhängig voneinander ansteuerbar. Jeder Motor treibt zumindest mittelbar mindestens oder genau ein Antriebsrad an. Es ist beispielsweise auch vorgesehen, dass zwischen Motor und Antriebsrad ein Getriebe angeordnet ist. Ferner weist das Arbeitsgerät mindestens ein Reinigungswerkzeug, beispielsweise mindestens eine Reinigungsbürste und/oder ein Wischtuch, auf.

Des Weiteren weist das Arbeitsgerät mindestens einen Energiespeicher auf, der zur Spannungsversorgung des Arbeitsgerätes, insbesondere zur Spannungsversorgung der Steuereinheit und insbesondere eines Arbeitswerkzeugs, insbesondere eines Reinigungswerkzeugs, ausgebildet und im Gehäuse elektrisch verschaltet ist.

Die Steuereinheit des Arbeitsgerätes ist dazu ausgebildet und eingerichtet, zumindest während einer Bewegung in der Innenraumumgebung Positionsdaten des Arbeitsgerätes und Routenparameterdaten zu erfassen. Die Positionsdaten beinhalten die aktuelle Position des Arbeitsgeräts in der Innenraumumgebung und/oder einen Positionsverlauf, insbesondere über einen bestimmten Zeitraum. Der Positionsverlauf repräsentiert insbesondere einen Pfad in der Innenraumumgebung. Die erfassten Positionsdaten und Routenparameterdaten werden beispielsweise in einem Speicher abgelegt und zur weiteren Verwendung bereitgehalten.

Als Routenparameterdaten werden beispielsweise Anstoßkontakte mit Hindernissen, insbesondere die Anzahl an Anstoßkontakten mit Hindernissen, erfasst. Dabei wird vorzugsweise unterschieden zwischen Anstoßkontakten mit einer Wand und Anstoßkontakten mit anderen Hindernissen. Alternativ oder zusätzlich wird ein mittels einer Sensoreinheit erkanntes Hindernis als Routenparameter erfasst. Alternativ oder zusätzlich ist ferner vorgesehen, dass eine Arbeitszeit, insbesondere für die Erledigung einer Arbeitsaufgabe, und/oder eine Größe einer von dem Arbeitsgerät überfahrenen Fläche und/oder ein Anteil einer überfahrenen Fläche an einer Gesamtfläche der Innenraumumgebung und/oder andere Fahrereignisse erfasst bzw. bestimmt. Die vorstehenden Parameter sind insbesondere die jeweiligen Routenparameter. Während einer Bewegung in der Innenraumumgebung werden vorzugsweise Routenparameterdaten erfasst, die mindestens oder genau einen Routenparameter oder eine Mehrzahl von Routenparametern repräsentieren.

Die Steuereinheit ist ferner dazu ausgebildet und eingerichtet, zumindest unter Verwendung von Positionsdaten und von Routenparameterdaten mindestens eine bezüglich mindestens eines Routenparameters optimierte Route zu ermitteln und/oder die Positionsdaten und Routenparameterdaten zur Bestimmung mindestens einer bezüglich mindestens eines Routenparameters optimierten Route an einer Datenschnittstelle bereitzustellen. Dabei werden beispielsweise aktuell erfasste Positionsdaten und Routenparameterdaten verwendet und/oder Positionsdaten und Routenparameterdaten, die bei einer oder mehreren Bewegungen in der Innenraumumgebung erfasst und in einem Speicher abgelegt worden sind. Die Steuereinheit ist zudem dazu ausgebildet und eingerichtet, die optimierte Route in mindestens einem Speicher abzulegen. Das Ermitteln einer bezüglich eines Routenparameters optimierten Route kann insbesondere nur für solche Routenparameter erfolgen, bezüglich derer auch Routenparameterdaten erfasst worden sind.

Unter Verwendung der in dem Speicher abgelegten Positionsdaten und Routenparameterdaten kann beispielsweise in der Innenraumumgebung, insbesondere für einen Teil, z. B. einen Raum der Innenraumumgebung, mindestens eine Route ermittelt werden, die eine möglichst schnelle Reinigung unter Berücksichtigung der Minimierung einer Arbeitszeit ermöglicht. Dabei handelt es sich um die bezüglich des Routenparameters "Arbeitszeit" optimierte Route. Zudem kann beispielsweise eine Route ermittelt werden, die eine möglichst gründliche Reinigung der Innenraumumgebung gewährleistet. Diese Route ist dann beispielsweise bezüglich eines Anteils einer von dem Arbeitsgerät überfahrenen Fläche an einer Gesamtfläche der Innenraumumgebung optimiert, indem der Anteil einem Maximum angenähert wird.

Des Weiteren ist vorzugsweise vorgesehen, dass mindestens eine möbelschonende Route ermittelt wird, bei der die Anzahl der Anstoßkontakte mit Hindernissen, insbesondere solchen Hindernissen, die von einer Wand der Innenraumumgebung verschieden sind, einem Minimum angenähert werden.

Beispielsweise erfolgt das Ermitteln einer bezüglich eines Routenparameters optimierten Route dadurch, dass die Steuereinheit die Route in der Innenraumumgebung derart aus den Positionsdaten zusammenfügt, dass der dem jeweiligen Routenparameter zugrundeliegende Parameter beispielsweise einem Minimum, z. B. Arbeitszeit oder Kontakte mit Hindernissen, oder einem Maximum, z. B. überfahrene Fläche, angenähert wird. Bei Anstoßkontakten wird der Routenparameter beispielsweise einem Minimum, also einer minimalen Anzahl an Anstoßkontakten, angenähert. Eine bezüglich eines Routenparameters optimierte Route im Sinne der vorliegenden Erfindung ist folglich eine Route, bei deren Bewältigung das Arbeitsgerät möglichst ideale Werte für den jeweiligen Routenparameter im Sinne einer "Zielgröße" erzielt. Es ist insbesondere vorgesehen, dass eine optimierte Route für einen einzelnen Raum der Innenraumumgebung ermittelt wird oder dass eine optimierte Route raumübergreifend ermittelt wird, so dass die optimierte Route eine bestimmte Abfolge der Räume im Rahmen einer Bewegung beinhalten kann.

Besonders bevorzugt ist vorgesehen, dass die Steuereinheit zum Ermitteln einer Route bezüglich einer Mehrzahl von Routenparametern ausgebildet und eingerichtet ist. Bei der Ermittlung der Route wird folglich die bestmögliche Optimierung bezüglich einer Mehrzahl von Routenparametern, z. B. Annäherung an ein Minimum oder Maximum, berücksichtigt. Beispielsweise soll eine möglichst schnelle Reinigung der Innenraumumgebung mit minimalen Anstoßkontakten erfolgen, so dass eine entsprechende Route bezüglich der Routenparameter "Arbeitszeit" und "Anstoßkontakte" optimiert wäre. Das Arbeitsgerät ist vorzugsweise dazu ausgebildet und eingerichtet, sich auch ohne das Erfassen der Positionsdaten und der Routenparameterdaten in der Innenraumumgebung fortzubewegen.

Vorzugsweise ist vorgesehen, dass eine Mindestanzahl von Fahrten bzw. Bewegungen in der Innenraumumgebung mit Erfassung von Positionsdaten und Routenparameterdaten erfolgt, bevor mindestens eine bezüglich mindestens eines Routenparameters optimierte Route ermittelt wird. Beispielsweise sind mindestens oder genau drei, mindestens oder genau vier, mindestens oder genau fünf, mindestens oder genau sechs Fahrten in der Innenraumumgebung vorgesehen, bevor die optimierte Route, insbesondere unter Verwendung der in einem Speicher abgelegten Daten, ermittelt wird.

Das Ermitteln der bezüglich mindestens eines Routenparameters optimierten Route erfolgt beispielsweise durch die Steuereinheit, insbesondere unter Verwendung einer Datenverarbeitungseinheit der Steuereinheit, oder durch eine weitere, externe Datenverarbeitungseinheit, z. B. ein Smartphone oder Tablet eines Benutzers, oder durch eine über ein Datennetz erreichbare Datenverarbeitungseinheit, z. B. einen Server. Die externe Datenverarbeitungseinheit ist dann zum Ermitteln mindestens einer optimierten Route und zum Bereitstellen der Daten zu der optimierten Route ausgebildet, so dass die Daten zu der optimierten Route über die Datenschnittstelle von dem Arbeitsgerät empfangen werden können.

Die Steuereinheit ist ferner vorzugsweise dazu ausgebildet und eingerichtet, einem Benutzer die voraussichtliche Arbeitszeit des Arbeitsgeräts für mindestens eine in Bezug auf mindestens einen Routenparameter optimierte Route anzuzeigen. Das Anzeigen erfolgt beispielsweise an einer Anzeigeeinrichtung des Arbeitsgeräts oder auf einer mobilen Datenverarbeitungseinheit, z. B. einem Smartphone.

Die Erfindung weist gegenüber dem Stand der Technik den Vorteil auf, dass der Einsatz des Arbeitsgerätes in Bezug auf mindestens eine Zielgröße, hier einen ausgewählten Routenparameter, optimiert werden kann. Das Arbeitsgerät kann mindestens eine Route in der Innenraumumgebung ermitteln, entlang der sich das Arbeitsgerät zur Erreichung der Zielgröße, z. B. eine geringe Anzahl an Anstoßkontakten, bewegen kann. Dadurch wird die Vorhersagbarkeit des Einsatzes eines Arbeitsgeräts in der Innenraumumgebung gesteigert, und die Einsätze werden reproduzierbar. Zudem wird die Zufriedenheit eines Benutzers gesteigert, da das Arbeitsgerät weniger oft ausfällt und eine bessere Übersicht über zu fahrende Routen gegeben ist.

Als besonders bevorzugt hat sich gemäß einer Ausgestaltung des Arbeitsgerätes herausgestellt, wenn vorgesehen ist, dass die Routenparameterdaten mit den zugehörigen Positionsdaten verknüpft werden. Durch die Verknüpfung der Daten ist beispielsweis ableitbar, an welchem Ort in der Innenraumumgebung welcher Routenparameter in welcher Form vorgelegen hat, insbesondere beispielsweise an welchem Ort ein Anstoßen des Arbeitsgerätes an einem Hindernis erfolgt ist.

Eine bevorzugte Ausgestaltung des Arbeitsgerätes sieht vor, dass die bezüglich mindestens eines Routenparameters optimierte Route unter Verwendung der Positionsdaten und Routenparameterdaten von Bewegungen des Arbeitsgeräts in der Innenraumumgebung zu unterschiedlichen Zeitpunkten ermittelt wird. Das Arbeitsgerät bewältigt vorzugsweise zu unterschiedlichen Zeitpunkten eine identische Route oder unterschiedliche Routen in der Innenraumumgebung mit oder ohne Erledigung von Arbeitsaufgaben. Die während dieser Bewegungen in der Innenraumumgebung erfassten Positionsdaten und Routenparameterdaten werden vorzugsweise in einem Speicher abgelegt, um diese Daten für die Ermittlung mindestens einer optimierten Route heranzuziehen. Die optimierte Route wird dann auf Basis der Verwendung von Daten von unterschiedlichen Bewegungen in der Innenraumumgebung ermittelt.

Besonders bevorzugt ist vorgesehen, dass sich die optimierte Route zumindest teilweise oder vollständig aus Segmenten unterschiedlicher Bewegungen bzw. Positionsverläufe zu verschiedenen Zeitpunkten zusammensetzt. Die optimierte Route wird folglich von der Steuereinheit des Arbeitsgerätes unter Verwendung des zu berücksichtigenden Routenparameters aus Segmenten einzelner gefahrener Routen in der Innenraumumgebung zusammengesetzt. Die Steuereinheit verwendet dabei die Segmente der bekannten und bereits befahrenen Routen, zu denen Positionsdaten und Routenparameterdaten zu mindestens einem Routenparameter vorliegen, und die hinsichtlich des zu für die Optimierung herangezogenen Routenparameters vorteilhaft sind.

Gemäß einer weiteren Ausgestaltung des Arbeitsgerätes ist vorgesehen, dass die Steuereinheit dazu ausgebildet und eingerichtet ist, das Arbeitsgerät zu veranlassen, sich in der Innenraumumgebung entlang einer Mehrzahl voneinander verschiedenen Routen zu bewegen. Für jede der einzelnen Routen werden Positionsdaten und Routenparameterdaten zu mindestens einem Routenparameter erfasst. Die erfassten und erforderlichenfalls zusätzlich weiteren in einem Speicher abgelegten Positionsdaten und Routenparameterdaten werden zur Ermittlung mindestens einer bezüglich mindestens eines Routenparameters optimierten Route verwendet.

Die verschiedenen Routen unterscheiden sich beispielsweise voneinander durch voneinander abweichende Startrichtungen ausgehend von einer Basisstation, und/oder eine andere Reihenfolge von Positionen und/oder die Abfolge von Räumen der Innenraumumgebung. Die Routen sind beispielsweise zufällig generiert oder vorbestimmt. Besonders bevorzugt ist vorgesehen, dass zwischen vier und zwölf Routen, die sich voneinander unterscheiden, verwendet werden, um Daten zu sammeln.

Insbesondere ist vorgesehen, dass ein Benutzer die Steuereinheit durch eine Eingabe, z. B. mittels eines Eingabemittels am Arbeitsgerät oder mittels einer Datenverarbeitungseinheit über die Datenschnittstelle, veranlassen kann, für mindestens einen Routenparameter eine optimierte Route zu ermitteln. Diese Eingabe veranlasst beispielsweise die Steuereinheit, das Arbeitsgerät zu veranlassen, wie vorstehend beschrieben eine Mehrzahl von verschiedenen Routen zu befahren und mindestens eine bezüglich des mindestens einen vorab ausgewählten Routenparameters, z. B. minimale Anstoßkontakte, eine optimierte Route zu ermitteln.

Als besonders vorteilhaft hat sich gemäß einer weiteren Ausgestaltung des Arbeitsgerätes herausgestellt, wenn vorgesehen ist, dass die voneinander verschiedenen Routen eine identische Startposition in der Innenraumumgebung haben. So ist für jede der unterschiedlichen Routen gewährleistet, dass das Arbeitsgerät eine gleichbleibende Ausgangsposition hat. Beispielsweise ist vorgesehen, dass das Steuergerät für jeden Raum der Innenraumumgebung eine separate, identische Startposition festlegt. Ist dann auf dieser Basis eine optimierte Route ermittelt worden, veranlasst die Steuereinheit das Arbeitsgerät, sich zunächst zu der jeweiligen Startposition zu begeben, bevor die optimierte Route zur Erledigung einer Arbeitsaufgabe befahren werden soll. Das gilt sowohl für die Innenraumumgebung insgesamt als auch für einen einzelnen Raum, wenn für den Raum Daten über eine Startposition vorhanden sind.

Vorzugsweise ist vorgesehen, dass die Startposition von der Position einer Basisstation, insbesondere einer Ausgangsbasisstation, in der Innenraumumgebung abweicht. Dazu ist vorgesehen, dass die Startposition für die verschiedenen Routen nach dem Abdocken von der Basisstation bzw. der Ausgangsbasisstation oder nach dem Abstellen des Arbeitsgerätes in der Innenraumumgebung angefahren wird, um ausgehend von der Startposition die unterschiedlichen Routen abzufahren.

Um insbesondere die Einflüsse der Fahrparameter auf die Routenparameter bzw. auf mindestens einen Routenparameter bestimmen zu können, ist gemäß einer weiteren Ausgestaltung vorgesehen, dass beim Bewegen mit Erfassen der Positionsdaten und der Routenparameterdaten, insbesondere durch die Steuereinheit, mindestens ein Fahrparameter variiert wird. Beispielsweise handelt es sich bei dem Fahrparameter um eine Fahrgeschwindigkeit des Arbeitsgeräts und/oder ein Fahrverhalten des Arbeitsgeräts an Hindernissen und/oder ein Fahrverhalten des Arbeitsgeräts an Ecken und/oder ein Bremsverhalten des Arbeitsgeräts.

Vorzugsweise wird mindestens eine oder eine Mehrzahl von Routen mit identischem Verlauf mit mindestens einer Variation des Fahrparameters abgefahren, um die Variation des Fahrparameters und deren Auswirkung auf den jeweiligen Routenparameter zu berücksichtigen. Vorteilhaft ist die Steuereinheit dazu eingerichtet und ausgebildet, eine Auswirkung der Änderung eines Fahrparameters auf mindestens einen Routenparameter zu ermitteln. Dadurch kann das Ermitteln der optimierten Route vorteilhaft auch unter Berücksichtigung der Fahrparameter erfolgen. Insbesondere ist vorgesehen, dass der Benutzer mindestens einen Fahrparameter manuell anpassen bzw. bestimmen kann. Das Anpassen bzw. Bestimmen erfolgt über eine Eingabe an einer mobilen Datenverarbeitungseinheit oder direkt am Arbeitsgerät.

Das Arbeitsgerät bewegt sich vorzugsweise zur Erledigung von Arbeitsaufgaben in der Innenraumumgebung. Gemäß einer weiteren Ausgestaltung ist insbesondere vorgesehen, dass die Steuereinheit dazu ausgebildet und eingerichtet ist, bei jeder Bewegung des Arbeitsgerätes in der Innenraumumgebung, also mit oder ohne Erledigung von Arbeitsaufgaben, Positionsdaten und Routenparameterdaten zu erfassen. Dadurch kann kontinuierlich die Datenbasis für die Ermittlung von optimierten Routen verbessert werden, so dass im laufenden Betrieb des Arbeitsgerätes kontinuierlich eine bessere Datenbasis für die Ermittlung bezüglich einer mindestens in Bezug auf einen Routenparameter optimierten Route erreicht werden kann. Die Zielerreichung beim Befahren einer optimierten Route, insbesondere die Optimierung in Bezug auf mindestens einen Routenparameter, kann dadurch vorteilhaft verbessert werden.

Im Laufe der Zeit können sich in der Innenraumumgebung Veränderungen ergeben. Daher ist gemäß einer weiteren Ausgestaltung des Arbeitsgerätes vorgesehen, dass die Steuereinheit dazu ausgebildet und eingerichtet ist, das Arbeitsgerät zu veranlassen, sich erneut in der Innenraumumgebung entlang mindestens einer Route zu bewegen, wenn eine Abweichung vom optimierten Routenparameter erkannt wird. Wenn sich beispielsweise das Arbeitsgerät entlang einer optimierten Route bewegt und sich die Vorteile der optimierten Route in Bezug auf den Routenparameter nicht mehr zeigen, z. B. die Anzahl der Anstoßkontakte steigt, wird daran insbesondere erkannt, dass eine Veränderung in der Innenraumumgebung erfolgt ist. Dann veranlasst die Steuereinheit das Arbeitsgerät, mindestens eine oder eine Mehrzahl von Routen zu befahren, um mindestens eine in Bezug auf mindestens einen Routenparameter optimierte Route erneut zu ermitteln. Beispielsweise erfolgt das Veranlassen, wenn eine Veränderung in Bezug auf den Routenparameter bei mindestens drei Bewegungen in Folge mindestens 10% beträgt. Wenn eine Route beispielsweise bezüglich des Routenparameters "Arbeitszeit" optimiert ist, die Arbeitszeit aber bei mindestens drei Bewegungen deutlich über einem Schwellenwert liegt, erfolgt das Veranlassen durch die Steuereinheit.

Alternativ oder zusätzlich ist vorgesehen, dass das Arbeitsgerät dazu veranlasst wird, sich entlang mindestens einer Route in der Innenraumumgebung zu bewegen, wenn eine vorbestimmte Dauer seit der letzten Bewegung entlang voneinander verschiedener Routen abgelaufen ist, wobei für die mindestens eine Route Positionsdaten und Routenparameterdaten zu mindestens einem Routenparameter erfasst werden. Die erneute Ermittlung mindestens einer bezüglich mindestens eines Routenparameters optimierten Route erfolgt beispielsweise zeit- oder anlassgesteuert.

Es ist auch vorgesehen, dass die Steuereinheit dazu ausgebildet und eingerichtet ist, das Arbeitsgerät zu veranlassen, in vorbestimmten Zeitabständen zumindest einen Teil einer optimierten Route während einer Bewegung in der Innenraumumgebung temporär zu verändern und anschließend zu überprüfen, ob eine Optimierung der Route in Bezug auf einen bestimmten Routenparameter - also die Zielerreichung - verbessert oder verschlechtert ist. Tritt eine Verbesserung auf, also können beispielsweise die Anstoßkontakte weiter reduziert werden, wird die optimierte Route entsprechend modifiziert und in einem Speicher abgelegt. Insbesondere ist vorgesehen, dass diese Funktionalität durch einen Benutzer aktivierbar oder deaktivierbar ist.

Eine weitere Ausgestaltung des Arbeitsgerätes sieht vor, dass die Steuereinheit dazu ausgebildet und eingerichtet ist, Daten zu mindestens einem Ausfallparameter bei einer Bewegung in der Innenraumumgebung zu erfassen. Bei einem Ausfallparameter wird beispielsweise erkannt, dass zu einem bestimmten Zeitpunkt an einer bestimmten Position das Arbeitsgerät stehengeblieben ist, also eine vorbestimmte Route nicht vollendet hat. Auf Basis der Daten zu diesem Ausfallparameter wird vorzugsweise mindestens eine Position in der Innenraumumgebung oder mindestens ein Bereich oder mindestens eine Strecke der Innenraumumgebung von einer zukünftigen Bewegung oder einer Route ausgeschlossen. Das Arbeitsgerät analysiert folglich alle nicht vollendeten Routen und ermittelt, aus welchem Grund das Arbeitsgerät den Verlauf der Route nicht beendet hat. Insbesondere ist vorgesehen, dass vordefinierte Fehlercodes als Ausfallparameter erfasst werden. Beispielsweise würde als Ausfallparameter ermittelt, wenn das Arbeitsgerät an einer Stufe mit einem Nothalt stoppt oder unter einem Möbelstück festgefahren ist.

Eine weitere Ausgestaltung des Arbeitsgerätes sieht vor, dass die Steuereinheit dazu ausgebildet und eingerichtet ist, für jeden optimierten Routenparameter und für jeden Raum der Innenraumumgebung mindestens oder genau eine optimierte Route in einem Speicher bereitzuhalten. Vorzugsweise sind in dem Speicher für jeden Raum mindestens oder genau zwei Karten abgelegt, die eine Route enthalten, die jeweils bezüglich genau eines Routenparameters optimiert ist. Dadurch kann ein Benutzer für jeden Raum einen Routenparameter auswählen, auf dessen Basis die Erledigung einer Arbeitsaufgabe erfolgen soll, und das Arbeitsgerät erledigt die Arbeitsaufgabe unter Verwendung der jeweiligen Route.

Im Betrieb des Arbeitsgerätes kann es vorkommen, dass das Arbeitsgerät manuell von einem Benutzer versetzt wird, beispielsweise in einen anderen Raum versetzt wird. Eine weitere Ausgestaltung des Arbeitsgerätes sieht vor, dass das Arbeitsgerät mindestens eine Sensoreinheit aufweist, und dass die Steuereinheit dazu ausgebildet und eingerichtet ist, unter Verwendung der Sensoreinheit mindestens eine Basisstation in der Innenraumumgebung bei der Vorbeifahrt zu erkennen und die Position der Basisstation für eine zukünftige Anfahrt der Basisstation in einem Speicher abzulegen. Dadurch kann die Position einer neu erkannten Basisstation nach Vollendung einer Arbeitsaufgabe auf der Route verwendet werden. Die Sensoreinheit weist beispielsweise mindestens eine Kamera und/oder mindestens einen Lasersensor auf. Vorzugsweise ist die Sensoreinheit zur Erfassung von dreidimensionalen Umgebungsdaten ausgebildet.

Besonders bevorzugt ist gemäß einer weiteren Ausgestaltung des Arbeitsgerätes vorgesehen, dass die Steuereinheit dazu ausgebildet und eingerichtet ist, eine Innenraumumgebung und/oder eine Position des Arbeitsgeräts in einer Innenraumumgebung anhand von mindestens einem für die Innenraumumgebung individuellen Umgebungsparameter zu erkennen. Vorzugsweise wird eine Kombination von Umgebungsparametern für die Erkennung verwendet. Als Umgebungsparameter werden beispielsweise die Abmessung eines Raumes, eine Art des Bodenbelages, eine Art und Anordnung von vorhandenen Hindernissen, die Kombination der vorhandenen Hindernisse, eine Raumtemperatur, eine Anzahl und/oder Art von empfangbaren Funknetzen, eine Signalstärke mindestens eines empfangbaren Funknetzes, eine Raumhöhe, ein Raumhöhenprofil, ein Deckenprofil und/oder die Art und Anzahl von Raumöffnungen herangezogen. Der oder die Umgebungsparameter werden beispielsweise mittels der Sensoreinheit erfasst. Als Hindernisse, deren Art, Kombination und Position herangezogen werden, dienen beispielsweise Tische, Stühle, Nischen, Wandvorsprünge und weiteres. Die Steuereinheit weist vorzugsweise mindestens einen Sensor zur Bodenerkennung auf. Die Kombination von mindestens zwei Umgebungsparametern stellt ein eindeutiges charakteristisches Kennzeichen für die Innenraumumgebung, insbesondere für genau einen Raum, dar, das zumindest zum Erkennen des Raumes verwendet werden kann.

Ist die Innenraumumgebung bzw. der Raum von der Steuereinheit erkannt worden, veranlasst die Steuereinheit die Arbeitseinheit, sich entlang einer für diese Innenraumumgebung in Bezug auf mindestens einen Routenparameter optimierten Route zu bewegen. Dabei ist vorgesehen, dass ein Standardwert für den Routenparameter festgelegt ist, insbesondere also der Routenparameter "Arbeitszeit" verwendet wird, wenn der Benutzer keine abweichende Auswahl vorgenommen hat.

Der Benutzerkomfort für einen Benutzer des Arbeitsgerätes wird vorteilhaft dadurch gesteigert, dass gemäß einer Ausgestaltung vorgesehen ist, dass das Arbeitsgerät dazu eingerichtet und ausgebildet ist, einem Benutzer mindestens eine Route für eine Bewegung des Arbeitsgerätes anhand mindestens eines optimierten Routenparameters für eine Arbeitsaufgabe zur Auswahl anzuzeigen, und dass die Steuereinheit das Arbeitsgerät nach einer Auswahl durch den Benutzer zur Bewegung entlang der ausgewählten Route steuert. Beispielsweise ist die Steuereinheit dazu ausgebildet und eingerichtet, das Arbeitsgerät standardmäßig entlang einer Route zu bewegen, die bezüglich des Routenparameters "Arbeitszeit" optimiert ist. Ein Benutzer kann beispielsweise über eine Eingabevorrichtung, wie ein Smartphone oder ein Display am Arbeitsgerät, die unterschiedlichen Routen bzw. die unterschiedlichen Routenparameter, anhand derer die angebotenen Routen optimiert sind, überprüfen und bezüglich der eigenen Vorstellungen auswählen. Beispielsweise in einer Innenraumumgebung, insbesondere in einem Raum, mit sehr hochwertigen Möbeln kann eine Route mit minimalem Möbelkontakt ausgewählt werden, also eine Route, die hinsichtlich des Routenparameters "Anstoßkontakte" optimiert worden ist.

Gemäß einer letzten Ausgestaltung des Arbeitsgerätes ist vorgesehen, dass das Arbeitsgerät derart ausgebildet und eingerichtet ist, dass eine individuelle Gewichtung mindestens eines Routenparameters, insbesondere einer Mehrzahl von Routenparametern, für einen Benutzer vor oder während der Auswahl für die Anzeige einer optimierten Route einstellbar ist. Beispielsweise wird dem Benutzer anhand eines Schiebebalkens auf einer Datenverarbeitungseinheit, z. B. einem Smartphone oder einem Display am Arbeitsgerät, eine Gewichtung verschiedener Routenparameter bei der Ermittlung der optimierten Route angezeigt. Der Benutzer kann die persönliche Bedeutung einzelner Routenparameter durch Verschieben der Schiebebalken, beispielsweise durch eine prozentuale Angabe mittels eines Schiebebalkens zwischen 0% und 100%, festlegen. Die Steuereinheit bestimmt anschließend mindestens eine optimierte Route, die auf einer Mischkalkulation der Gewichtung der einzelnen Routenparameter basiert. Die Gewichtung bei der Ermittlung folgt der Auswahl des Benutzers. Wenn beispielsweise eine Route mit einer Gewichtung von 60% bezüglich der Anstoßkontakte und einer Gewichtung von 50% bezüglich der Arbeitszeit optimiert werden soll, wird die Steuereinheit eine Minimierung der Anstoßkontakte etwas höher gewichten als die Reduzierung der Arbeitszeit. Das Ergebnis ist dann nicht die kürzeste erreichbare Arbeitszeit, sondern eine etwas längere Arbeitszeit, aber mit reduzierten Anstoßkontakten.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Arbeitsgerätes in perspektivischer Ansicht,
- Fig. 2: ein Ausführungsbeispiel eines schematischen Ablaufs einer Steuerung durch eine Steuereinheit,
- Fig. 3: eine schematische Darstellung von verschiedenen Routen in einer Innenraumumgebung, und
- Fig. 4: ein Ausführungsbeispiel einer Datenverarbeitungseinheit der Steuereinheit.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

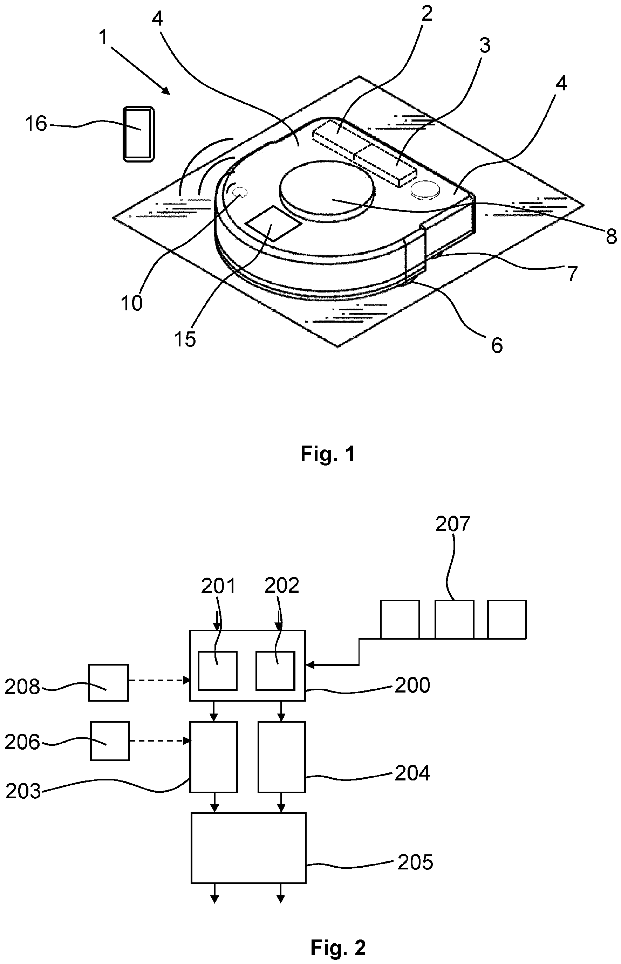

Fig. 1 zeigt ein Ausführungsbeispiel eines Arbeitsgerätes 1 in perspektivischer Ansicht. Das Arbeitsgerät 1 ist bei diesem Ausführungsbeispiel als Saugroboter ausgebildet. Das Arbeitsgerät 1 weist eine Steuereinheit 2 und einen Energiespeicher 3 auf. Die Steuereinheit 2 und der Energiespeicher 3 sind in einem Gehäuse 4 des Arbeitsgerätes 1 angeordnet. Das Arbeitsgerät 1 ist dazu eingerichtet und ausgebildet, sich fahrend in einer Innenraumumgebung 5 autonom fortzubewegen und Arbeitsaufgaben, hier Reinigungsaufgaben, zu erledigen. Das Arbeitsgerät 1 weist zwei Antriebsräder 6 sowie ein Reinigungswerkzeug 7 auf. Das Arbeitsgerät 1 weist ferner eine Sensoreinheit 8 auf, um das autonome Bewegen in der Innenraumumgebung 5 zu gewährleisten.

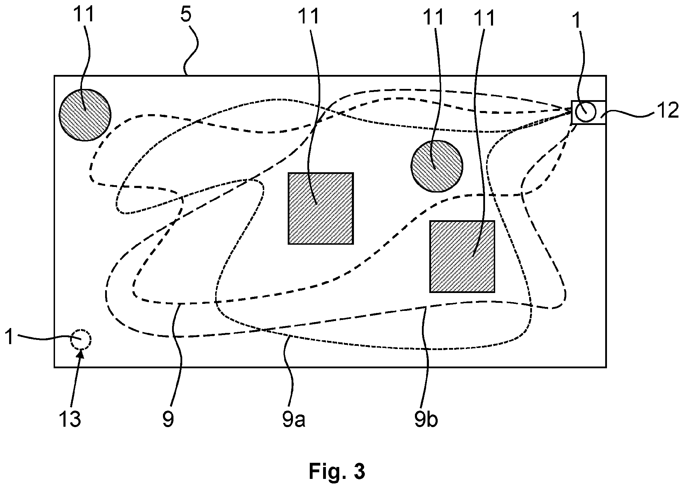

Fig. 2 zeigt ein Ausführungsbeispiel eines schematischen Ablaufs der Funktionen der Steuereinheit 2. Die Steuereinheit 2 ist zum Erfassen 200 von Positionsdaten 201 und Routenparameterdaten 202 zumindest während einer Bewegung des Arbeitsgerätes 1 in einer Innenraumumgebung 5 ausgebildet und eingerichtet. Unter Verwendung von erfassten und insbesondere in einem Speicher 425 bereitgehaltenen Positionsdaten 201 und Routenparameterdaten 202, insbesondere zu einem Routenparameter, erfolgt ein Ermitteln 203 mindestens einer bezüglich des Routenparameters optimierten Route 9 - siehe Fig. 3 - in der Innenraumumgebung 5. Alternativ oder zusätzlich zum Ermitteln 203 einer optimierten Route 9 erfolgt das Bereitstellen 204 von Positionsdaten 201 und Routenparameterdaten 202 zu mindestens einem Routenparameter an einer Datenschnittstelle 10 - siehe Fig. 1.

Anschließend erfolgt ein Ablegen 205 der optimierten Route 9, die von der Steuereinheit 2 ermittelt 203 worden ist, oder die über die Datenschnittstelle 10 empfangen worden ist, bzw. von Daten zu der optimierten Route 9 in einem Speicher 425. Vorzugsweise werden die Positionsdaten 201 mit zugehörigen Routenparameterdaten 202 verknüpft. Dadurch kann den Routenparameterdaten 202 jeweils mindestens eine Position oder ein Positionsverlauf zugeordnet werden.

Als Routenparameterdaten 202 werden beispielsweise Anstoßkontakte mit Hindernissen bzw. die Anzahl an Anstoßkontakten mit Hindernissen, ein von der Sensoreinheit erkanntes Hindernis, eine Arbeitszeit, eine Größe einer überfahrenen Fläche und/oder ein Anteil einer überfahrenen Fläche an der Gesamtfläche der Innenraumumgebung 5 herangezogen. Die in Bezug auf mindestens einen Routenparameter optimierte Route 9 wird vorzugsweise unter Verwendung von Positionsdaten 201 und Routenparameterdaten 202 von Bewegungen in der Innenraumumgebung 5 zu unterschiedlichen Zeitpunkten 206 ermittelt 203. Insbesondere werden zur Optimierung Daten aus der Vergangenheit, die in einem Speicher 425 bereitgehalten werden, und aktuelle Daten verwendet.

Die Steuereinheit 2 ist ferner zum Veranlassen 207 des Arbeitsgeräts 1, sich in der Innenraumumgebung 5 entlang einer Mehrzahl von einander verschiedenen Routen 9a, 9b (siehe Fig. 3) zu bewegen, ausgebildet und eingerichtet. Dabei werden für jede alternative Route 9a, 9b Positionsdaten 201 und Routenparameterdaten 202 zu mindestens einem Routenparameter erfasst. Unter Verwendung zumindest eines Teils der erfassten Daten wird mindestens eine bezüglich mindestens eines Routenparameters optimierte Route 9 ermittelt 203. Vorzugsweise ist vorgesehen, dass ein Benutzer auswählen kann, bezüglich welchen mindestens einen Routenparameters eine Erfassung von Routenparameterdaten 202 während der Bewegung entlang der Mehrzahl an Routen 9a,9b erfolgen soll. Die bezüglich des Routenparameters optimierte Route 9 kann dem Benutzer anschließend zur Erledigung einer Arbeitsaufgabe in der Innenraumumgebung 5 zur Auswahl angezeigt werden. Beispielsweise kann der Benutzer eine bezüglich der Anstoßkontakte optimierte Route 9 ermitteln 203 lassen, um die Möbel in einer Innenraumumgebung 5 zu schonen.

Fig. 3 zeigt beispielhaft eine Draufsicht auf eine Innenraumumgebung 5 mit verschiedenen Hindernissen 11. In der Innenraumumgebung 5 ist mindestens eine Basisstation 12 angeordnet, an der sich das Arbeitsgerät 1 beispielhaft befindet. Die Steuereinheit 2 ist zum Veranlassen 207 des Arbeitsgeräts 1 ausgebildet und eingerichtet, die voneinander verschiedenen Routen 9a, 9b ausgehend von einer identischen Startposition, hier der Basisstation 12, anzufahren. Alternativ dazu ist vorgesehen, dass die Startposition 13 von der Position der Basisstation 12 abweicht. Beispielhaft ist eine alternative Startposition 13 gemäß Fig. 3 unten links in der Innenraumumgebung 5 dargestellt. Beispielsweise ist die Startposition 13 die Position, die das Arbeitsgerät 1 anfahren würde, wenn es von außerhalb der Innenraumumgebung 5 in die Innenraumumgebung 5 versetzt würde.

Um insbesondere die Auswirkungen auf den Routenparameter zu ermitteln, ist vorzugsweise vorgesehen, dass die Steuereinheit 2 zum Variieren 208 mindestens eines Fahrparameters während einer Bewegung in der Innenraumumgebung 5 ausgebildet und eingerichtet ist. Beispielsweise erfolgt ein Variieren 208 einer Fahrgeschwindigkeit, eines Fahrverhaltens an Hindernissen, eines Fahrverhaltens an Ecken und/oder eines Bremsverhaltens, insbesondere an Hindernissen. Vorzugsweise ist vorgesehen, dass die Steuereinheit 2 dazu ausgebildet und eingerichtet ist, bei jeder Bewegung in der Innenraumumgebung 5 Positionsdaten 201 und Routenparameterdaten 202 zu mindestens einem Routenparameter zu erfassen.

Die Steuereinheit 2 ist zudem dazu eingerichtet und ausgebildet, für jeden Routenparameter und für jeden Raum der Innenraumumgebung 5 mindestens oder genau eine optimierte Route 9 in einem Speicher 425 bereitzuhalten.

Das Arbeitsgerät 1 weist vorzugsweise mindestens eine Sensoreinheit 8 - siehe Fig. 1 - auf, die von der Steuereinheit 2 verwendet werden kann, um eine Basisstation 12 in der Innenraumumgebung 5 bei einer Vorbeifahrt zu erkennen und die Position der Basisstation 12 in der Innenraumumgebung 5 für eine zukünftige Anfahrt der Basisstation 12 in einem Speicher 425 abzulegen 205.

Die Steuereinheit 2 ist ferner dazu ausgebildet und eingerichtet, eine Innenraumumgebung 5 und/oder eine Position des Arbeitsgerätes 1 in einer Innenraumumgebung 5 anhand von mindestens einem Umgebungsparameter zu erkennen. Vorzugsweise wird eine charakteristische Kombination von mehreren Umgebungsparametern verwendet. Umgebungsparameter sind beispielsweise die Höhe und Abmessungen des Raumes, ein Bodenbelag und/oder die Art und Anzahl von Raumöffnungen, nämlich Fenster und Türen.

Die Steuereinheit 2 ist des Weiteren dazu eingerichtet und ausgebildet, einem Benutzer mindestens eine bezüglich mindestens eines Routenparameters optimierte Route 9 für eine Bewegung des Arbeitsgerätes 1 für eine Arbeitsaufgabe zur Auswahl anzuzeigen. Die Anzeige bzw. die Auswahl erfolgen beispielsweise anhand des Routenparameters bzw. eines Symbols für den jeweiligen Routenparameter. Beispielsweise wird eine Liste der Routenparameter an einer Anzeigeeinrichtung 15 des Arbeitsgerätes 1 angezeigt. Alternativ oder zusätzlich dazu kann eine Liste mit Routenparametern über die Datenschnittstelle 10 bereitgestellt werden, so dass diese Liste einem Benutzer auf dem Display einer mobilen Datenverarbeitungseinheit 16, beispielsweise eines Smartphones, dort in einer App, angezeigt werden kann.

Auch die Auswahl über das Display der mobilen Datenverarbeitungseinheit 16 wird dann über die Datenschnittstelle 10 von dem Arbeitsgerät 1 empfangen, so dass die Steuereinheit 2 das Arbeitsgerät 1 nach einer Auswahl durch den Benutzer zur Bewegung entlang der ausgewählten, optimierten Route 9 steuern kann.

Vorzugsweise kann der Benutzer eine Gewichtung von mindestens zwei Routenparametern bei einem Ermitteln 203 einer optimierten Route manuell festlegen. Die Gewichtung erfolgt beispielsweise durch eine Auswahl mittels virtueller Schieberegler an der Anzeigeeinrichtung 15 oder auf der mobilen Datenverarbeitungseinheit 16. Anschließend erfolgt ein Ermitteln 203 der bezüglich der gewichteten Routenparameter optimierten Route 9.

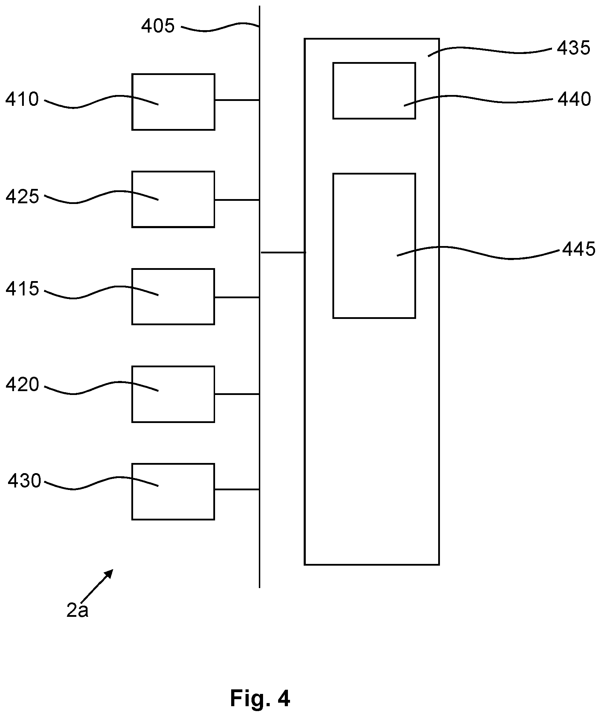

Fig. 4 zeigt ein Ausführungsbeispiel einer schematisch dargestellten Datenverarbeitungseinheit 2a für eine Steuereinheit 2 der beschriebenen Ausführungsbeispiele. Es ist insbesondere vorgesehen, dass einzelne Elemente der Datenverarbeitungseinheit 2a mehrfach vorhanden sind, insbesondere wenn die Datenverarbeitungseinheit 2a bzw. die Steuereinheit 2 teilweise in einem Arbeitsgerät 1 und teilweise von einem räumlich entfernten Computer realisiert ist. Fig. 4 zeigt eine schematische Darstellung einer Ausführungsform einer Datenverarbeitungseinheit 2a, die einige oder alle Schritte zu der in den verschiedenen Ausführungsformen beschriebenen Funktion der Steuereinheit 2 ausführen kann.

Die Datenverarbeitungseinheit 2a ist mit Hardwareelementen dargestellt, die über einen Bus 405 elektrisch gekoppelt sind oder gegebenenfalls auf andere Weise miteinander kommunizieren. Die Hardwareelemente können einen oder mehrere Prozessoren 410, einschließlich und ohne Einschränkung einen oder mehrere Allzweckprozessoren und/oder einen oder mehrere Spezialprozessoren, ein oder mehrere Eingabegeräte 415 und ein oder mehrere Ausgabegeräte 420 umfassen. Die Datenverarbeitungseinheit 2a weist ferner einen oder mehrere Speicher 425 auf und/oder steht mit diesen in Verbindung.

Die Datenverarbeitungseinheit 2a kann ferner ein Kommunikationssubsystem 430 aufweisen. In einigen Ausführungsformen umfasst die Datenverarbeitungseinheit 2a außerdem einen Arbeitsspeicher 435. Die Datenverarbeitungseinheit 2a kann auch Software-Elemente enthalten, die sich - wie beispielhaft dargestellt - im Arbeitsspeicher 435 befinden. Davon umfasst sein können ein Betriebssystem 440, Gerätetreiber, ausführbare Bibliotheken und/oder ein anderer Code, beispielsweise ein oder mehrere Anwendungsprogramme 445.

Lediglich beispielhaft können ein oder mehrere Schritte, die in Bezug auf die Funktionen der Steuereinheit 2 beschrieben worden sind, als Code und/oder Anweisungen implementiert werden, die von einem Computer und/oder einem Prozessor innerhalb eines Computers ausführbar sind; in einem Aspekt können dann ein solcher Code und/oder solche Anweisungen verwendet werden, um einen Allzweckcomputer oder ein anderes Gerät zu konfigurieren und/oder anzupassen, um ein oder mehrere Schritte gemäß den beschriebenen Verfahren oder Funktionen des Systems auszuführen.

Ein Teil dieser Anweisungen und/oder der Code kann auf einem computerlesbaren Speichermedium, wie dem/den oben beschriebenen Speicher 425, gespeichert werden. Wie oben erwähnt, können in einem Aspekt einige Ausführungsformen ein Computersystem wie die Datenverarbeitungseinheit 2a verwenden, um die Funktionen der Steuereinheit 2 auszuführen. Gemäß einer Ausführungsform werden einige oder alle Funktionen der Steuereinheit 2 von der Datenverarbeitungseinheit 2a als Reaktion auf die Ausführung einer oder mehrerer Sequenzen von einem oder mehreren Befehlen durch den Prozessor 410 durchgeführt, die in das Betriebssystem 440 und/oder einen anderen Code, wie ein Anwendungsprogramm 445, das im Arbeitsspeicher 435 enthalten ist, integriert sein können. Solche Anweisungen können in den Arbeitsspeicher 435 von einem anderen computerlesbaren Medium, wie einem oder mehreren der Speicher 425, eingelesen werden. Lediglich als Beispiel könnte die Ausführung der im Arbeitsspeicher 435 enthaltenen Befehlsfolgen den/die Prozessor(en) 410 veranlassen, ein oder mehrere Funktionen der Steuereinheit 2 durchzuführen.

Die Begriffe "maschinenlesbares Medium" und "computerlesbares Medium", wie sie hier verwendet werden, beziehen sich auf jedes Medium, das an der Bereitstellung von Daten beteiligt ist, die eine Datenverarbeitungseinheit veranlassen, in einer bestimmten Weise zu arbeiten. In einer Ausführungsform, die unter Verwendung der Datenverarbeitungseinheit 2a implementiert wird, können verschiedene computerlesbare Medien an der Bereitstellung von Anweisungen/Codes für den/die Prozessor(en) 410 zur Ausführung beteiligt sein und/oder zum Speichern und/oder Übertragen solcher Anweisungen/Codes verwendet werden. In vielen Implementierungen ist ein computerlesbares Medium ein physisches und/oder greifbares Speichermedium. Ein solches Medium kann die Form eines nichtflüchtigen Mediums oder eines flüchtigen Mediums haben. Zu den nichtflüchtigen Medien gehören beispielsweise optische und/oder magnetische Platten, wie die Speicher 425. Zu den flüchtigen Medien gehören unter anderem dynamische Speicher, wie der Arbeitsspeicher 435.

Das Kommunikationssubsystem 430 und/oder seine Komponenten empfangen üblicherweise Signale, und der Bus 405 kann dann die Signale und/oder die Daten, Anweisungen usw., die von den Signalen getragen werden, zum Arbeitsspeicher 435 transportieren, aus dem der/die Prozessor(en) 410 die Anweisungen abruft und ausführt. Die vom Arbeitsspeicher 435 empfangenen Anweisungen können optional vor oder nach der Ausführung durch den/die Prozessor(en) 410 auf Speicher 425 gespeichert werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Arbeitsgerät
- 2: Steuereinheit
- 2a: Datenverarbeitungseinrichtung
- 3: Energiespeicher
- 4: Gehäuse
- 5: Innenraumumgebung
- 6: Antriebsrad
- 7: Reinigungswerkzeug
- 8: Sensoreinheit
- 9: Optimierte Route
- 9a: Alternative Route
- 9b: Alternative Route
- 10: Datenschnittstelle
- 11: Hindernis
- 12: Basisstation
- 13: Alternative Startposition
- 14 15: Anzeigeeinrichtung
- 16: Datenverarbeitungseinheit

- 200: Erfassen
- 201: Positionsdaten
- 202: Routenparameterdaten
- 203: Ermitteln
- 204: Bereitstellen
- 205: Ablegen
- 206: Zeitpunkt
- 207: Veranlassen
- 208: Variieren
- 405: Bus
- 410: Prozessor
- 415: Eingabegerät
- 420: Ausgabegerät
- 425: Speicher
- 430: Kommunikationssubsystem
- 435: Arbeitsspeicher
- 440: Betriebssystem
- 445: Anwendungsprogramm

## Patentansprüche

1. Arbeitsgerät (1), aufweisend mindestens eine Steuereinheit (2) und mindestens einen Energiespeicher (3), wobei das Arbeitsgerät (1) dazu ausgebildet und eingerichtet ist, sich fahrend in einer Innenraumumgebung (5) autonom fortzubewegen,
**dadurch gekennzeichnet, dass**
die Steuereinheit (2) dazu ausgebildet und eingerichtet ist, zumindest während einer Bewegung in der Innenraumumgebung (5) Positionsdaten (201) des Arbeitsgeräts (1) und Routenparameterdaten (202) zu erfassen (200), zumindest unter Verwendung von Positionsdaten (201) und von Routenparameterdaten (202) mindestens eine bezüglich mindestens eines Routenparameters optimierte Route (9) zu ermitteln (203) und/oder Positionsdaten (201) und Routenparameterdaten (202) zur Bestimmung mindestens einer bezüglich mindestens eines Routenparameters optimierten Route (9) an einer Datenschnittstelle (10) bereitzustellen (204), und die optimierte Route (9) in mindestens einem Speicher (425) abzulegen (205).

2. Arbeitsgerät (1) nach Anspruch 1,
**dadurch gekennzeichnet, dass**
die Routenparameterdaten (202) mit zugehörigen Positionsdaten (201) verknüpft werden.

3. Arbeitsgerät (1) nach Anspruch 1 oder 2,
**dadurch gekennzeichnet, dass**
als Routenparameterdaten (202) Anstoßkontakte mit Hindernissen (11) und/oder ein mittels mindestens einer Sensoreinheit (8) erkanntes Hindernis (11) und/oder eine Arbeitszeit, insbesondere für die Erledigung einer Arbeitsaufgabe, und/oder eine Größe einer überfahrenen Fläche der Innenraumumgebung (5) erfasst wird.

4. Arbeitsgerät (1) nach einem der Ansprüche 1 bis 3,
**dadurch gekennzeichnet, dass**
die optimierte Route (9) unter Verwendung von Positionsdaten (201) und Routenparameterdaten (202) von Bewegungen des Arbeitsgeräts (1) in der Innenraumumgebung (5) zu unterschiedlichen Zeitpunkten ermittelt wird, insbesondere dass sich die optimierte Route (9) aus Segmenten unterschiedlicher Bewegungen zu verschiedenen Zeitpunkten (206) zusam mensetzt.

5. Arbeitsgerät (1) nach einem der Ansprüche 1 bis 4,
**dadurch gekennzeichnet, dass**
die Steuereinheit (2) dazu ausgebildet und eingerichtet ist, das Arbeitsgerät (1) zu veranlassen, sich in der Innenraumumgebung (5) entlang einer Mehrzahl voneinander verschiedener Routen (9a,9b) zu bewegen, wobei für jede Route (9a,9b) Positionsdaten (201) und Routenparameterdaten (202) erfasst werden, und dass zumindest die erfassten Positionsdaten (201) und Routenparameterdaten (202) zur Ermittlung mindestens einer bezüglich mindestens eines Routenparameters optimierten Route (9) verwendet werden.

6. Arbeitsgerät (1) nach Anspruch 5,
**dadurch gekennzeichnet, dass**
die voneinander verschiedenen Routen (9a,9b) eine identische Startposition (13) in der Innenraumumgebung (5) haben, insbesondere dass die Startposition (13) von der Position einer Basisstation (12) abweicht.

7. Arbeitsgerät (1) nach einem der Ansprüche 1 bis 6,
**dadurch gekennzeichnet, dass**
beim Bewegen mit Erfassen (200) der Positionsdaten (201) und Routenparameterdaten (202) mindestens ein Fahrparameter variiert (208) wird, beispielsweise eine Fahrgeschwindigkeit und/oder ein Fahrverhalten an Hindernissen (11) und/oder ein Fahrverhalten an Ecken und/oder ein Bremsverhalten, vorzugsweise dass eine Auswirkung der Änderung eines Fahrparameters auf die Routenparameterdaten (202) ermittelt wird.

8. Arbeitsgerät (1) nach einem der Ansprüche 1 bis 7,
**dadurch gekennzeichnet, dass**
die Steuereinheit (2) dazu ausgebildet und eingerichtet ist, bei jeder Bewegung in der Innenraumumgebung (5) Positionsdaten (201) und Routenparameterdaten (202) zu erfassen.

9. Arbeitsgerät (1) nach einem der Ansprüche 1 bis 8,
**dadurch gekennzeichnet, dass**
die Steuereinheit (2) dazu ausgebildet und eingerichtet ist, das Arbeitsgerät (1) zu veranlassen, sich erneut in der Innenraumumgebung (5) entlang mindestens einer Route (9a,9b) zu bewegen, wenn eine Abweichung des optimierten Routenparameters erkannt wird und/oder wenn eine vorbestimmte Dauer seit der letzten Bewegung entlang voneinander verschiedener Routen (9a,9b) abgelaufen ist, wobei für die mindestens eine Route (9a,9b) Positionsdaten (201) und Routenparameterdaten (202) erfasst werden.

10. Arbeitsgerät (1) nach einem der Ansprüche 1 bis 9,
**dadurch gekennzeichnet, dass**
die Steuereinheit (2) dazu ausgebildet und eingerichtet ist, zumindest bei einer Bewegung in der Innenraumumgebung (5) Ausfallparameterdaten zu erfassen, insbesondere unter Verwendung von Positionsdaten (201) und Ausfallparameterdaten mindestens einen Ort in der Innenraumumgebung (5) oder mindestens einen Bereich oder mindestens eine Strecke in der Innenraumumgebung (5) von einer zukünftigen Bewegung oder einer Route (9a,9b) auszuschließen.

11. Arbeitsgerät (1) nach einem der Ansprüche 1 bis 10,
**dadurch gekennzeichnet, dass**
die Steuereinheit (2) dazu eingerichtet und ausgebildet ist, für jeden Routenparameter und für jeden Raum der Innenraumumgebung (5) mindestens oder genau eine optimierte Route (9) in einem Speicher (425) bereitzuhalten.

12. Arbeitsgerät (1) nach einem der Ansprüche 1 bis 11,
**dadurch gekennzeichnet, dass**
mindestens eine Sensoreinheit (8) vorhanden ist, und dass die Steuereinheit (2) dazu ausgebildet und eingerichtet ist, unter Verwendung der Sensoreinheit (8) mindestens eine Basisstation (12) in der Innenraumumgebung (5) bei einer Vorbeifahrt zu erkennen und die Position der Basisstation (12) für eine zukünftige Anfahrt der Basisstation (12) in einem Speicher (425) abzulegen.

13. Arbeitsgerät (1) nach einem der Ansprüche 1 bis 12,
**dadurch gekennzeichnet, dass**
die Steuereinheit (2) dazu ausgebildet und eingerichtet ist, eine Innenraumumgebung (5) und/oder eine Position des Arbeitsgeräts (1) in einer Innenraumumgebung (5) anhand von mindestens einem für die Innenraumumgebung (5) individuellen Umgebungsparameter zu erkennen, vorzugsweise anhand einer Kombination von Umgebungsparametern zu erkennen, insbesondere dass als Umgebungsparameter die Abmessungen eines Raumes, eine Art des Bodenbelages, eine Art von vorhandenen Hindernissen (11), die Kombination der vorhandenen Hindernisse (11), eine Raumtemperatur, eine Anzahl und/oder Art von empfangbaren Funknetzen, eine Signalstärke mindestens eines empfangbaren Funknetzes, eine Raumhöhe, ein Raumhöhenprofil, ein Deckenprofil und/oder die Art und Anzahl von Raumöffnungen verwendet wird.

14. Arbeitsgerät (1) nach einem der Ansprüche 1 bis 13,
**dadurch gekennzeichnet, dass**
die Steuereinheit (2) dazu eingerichtet und ausgebildet ist, einem Benutzer mindestens eine optimierte Route (9) für eine Bewegung des Arbeitsgeräts (1) anhand mindestens eines optimierten Routenparameters für eine Arbeitsaufgabe zur Auswahl anzuzeigen, und dass die Steuereinheit (2) das Arbeitsgerät (1) nach einer Auswahl durch den Benutzer zur Bewegung entlang der ausgewählten Route (9,9a) steuert.

15. Arbeitsgerät (1) nach Anspruch 14,
**dadurch gekennzeichnet, dass**
die Steuereinheit (2) derart ausgebildet und eingerichtet ist, dass eine individuelle Gewichtung mindestens eines Routenparameters, insbesondere einer Mehrzahl von Routenparametern, für einen Benutzer vor oder während der Auswahl für die Anzeige einer optimierten Route (9) einstellbar ist.
